# EUROPÄISCHE PATENTANMELDUNG

(11) **EP 1 587 200 A2**
(43) Veröffentlichungstag der Anmeldung: **19.10.2005**
(21) Anmeldenummer: 05004907.1
(22) Anmeldetag: 07.03.2005
(51) Int. Cl.: H02G 15/18, H02G 3/04, H02G 1/08

(54) **Hohlgeflechtschlauch aus rundgeflochtenen Litzen sowie Verfahren zum Herstellen eines solchen Hohlgeflechtschlauchs**

(30) Priorität: 13.04.2004 DE 102004018361
(71) Anmelder: Flexa GmbH & Co. KG, 63456 Manau/Main (DE)
(72) Erfinder: Fieber, Dieter, 63512 Hainburg (DE)
(74) Vertreter: Grimm, Ekkehard

(57) **Zusammenfassung**

Die Erfindung beschreibt einen Hohlgeflechtschlauch aus rundgeflochtenen Litzen, wobei der Schlauch durch axiales Aufstauchen in seinem Durchmesser vergrößert werden kann und durch Strecken in seinem Durchmesser verkleinert werden kann, der dadurch gekennzeichnet ist, dass der Schlauch um einen Spiralschlauch herum geflochten ist, wobei der Spiralschlauch einen entfernbaren Stützkörper bildet. Weiterhin wird ein Verfahren zum Herstellen eines solchen Hohlgeflechtschlauchs angegeben.

## Beschreibung

Die vorliegende Erfindung betrifft einen Hohlgeflechtschlauch aus rundgeflochtenen Litzen, wobei der Schlauch durch axiales Aufstauchen in seinem Durchmesser vergrößert werden kann und durch Strecken in seinem Durchmesser verkleinert werden kann.

Hohlgeflechtschläuche, auch nur als Hohlgeflechte bezeichnet, sind seit vielen Jahren bekannt und werden dazu eingesetzt, Kabel zu bündeln und zu schützen. Solche Hohlgeflechtschläuche werden zum einen aus Metalllitzen geflochten, zum Beispiel aus verzinktem Stahldraht, nicht rostendem Stahldraht, Bronze und verzinktem Kupferdraht, so dass sie auch gleichzeitig als Abschirmung verwendet werden können, oder aber auch aus Kunststoff-Monofasern und/oder Glasseide. Solche Hohlgeflechtschläuche haben die Eigenschaft, dass sie durch axiales Aufstauchen in ihrem Durchmesser vergrößert werden können und durch Streckung in ihrem Durchmesser verkleinert werden können. Die Hohlgeflechtschläuche werden auf Trommeln bevorratet und bei Gebrauch auf die erforderliche Länge abgelängt. Anschließend werden die zu bündelnden Drähte in den Hohlgeflechtschlauch eingezogen. Unter einem Zug in axialer Richtung kann dann der Hohlgeflechtschlauch in seinem Durchmesser so verringert werden, dass er eng an dem Kabelbündel anliegt.

In der Vergangenheit hat sich gezeigt, dass solche Hohlgeflechtschläuche dann, wenn sie auf einer Trommel aufgewickelt und bevorratet werden, flach zusammengedrückt werden. Je nach Art des eingesetzten Materials, aus dem diese Hohlgeflechtschläuche hergestellt sind, können diese abgeflachten, bevorrateten Hohlgeflechtschläuche dann, wenn sie aufgestaucht werden, um dort hindurch Kabelbündel zu ziehen, Knickstellen in axialer Richtung aufweisen. Auch hat sich gezeigt, dass das Einziehen der Kabel insbesondere dann zu Problemen führen kann, wenn Kabel großer Längen gebündelt werden sollen.

Aus dem Dokument DE 42 31 401 A1 ist eine Hülle, insbesondere für elektrische Leitungen und Kabel, bestehend aus einem textilen Flächengebilde, wobei innerhalb des textilen Flächengebildes mindestens ein Faden aus elastischem Material in Längsrichtung der Hülle verlaufend angeordnet ist und das textile Flächengebilde in Hüllenlängsrichtung derart dehnbar ausgebildet und mit dem elastischen Faden derart verbunden ist, dass eine Dehnung des elastischen Fadens in Längsrichtung eine Dehnung des Flächengebbildes unter gleichzeitiger Verringerung der Öffnungsweite im ungedehnten Zustand der Hülle verursacht, bekannt.

Der vorliegenden Erfindung liegt nun die Aufgabe zugrunde, einen Hohlgeflechtschlauch zu schaffen, bei dem die vorstehenden Probleme, die sich insbesondere durch die Bevorratung solcher Hohlgeflechtschläuche ergeben, vermieden werden, der aber auch das Einziehen von Kabelbündeln erleichtert. Weiterhin liegt der vorliegenden Erfindung die Aufgabe zugrunde, ein Verfahren zum Herstellen eines Hohlgeflechtschlauchs, der diese Eigenschaften besitzt, zu schaffen.

Gelöst wird die vorstehende Aufgabe zum einen durch einen Hohlgeflechtschlauch aus rundgeflochtenen Litzen, wobei der Schlauch durch axiales Aufstauchen in seinem Durchmesser vergrößert werden kann und durch Strecken in seinem Durchmesser verkleinert werden kann, der dadurch gekennzeichnet ist, dass der Schlauch um einen Spiralschlauch herum geflochten ist, wobei der Spiralschlauch einen entfernbaren Stützkörper bildet.

Weiterhin wird die Aufgabe gelöst durch ein Verfahren zum Herstellen eines Hohlgeflechtschlauchs, bei dem Litzen zu einem Schlauch rundgeflochten werden, das dadurch gekennzeichnet ist, dass während des Flechtens des Schlauchs ein Spiralschlauch, einen entfernbaren Stützkörper bildend, von dem Hohlgeflechtschlauch umflochten wird, der Hohlgeflechtschlauch mit dem Spiralschlauch gelagert wird und bei Gebrauch des Hohlgeflechtschlauchs der Spiralschlauch entfernt wird und mindestens ein Kabel und/oder eine Leitung in den Hohlgeflechtschlauch eingezogen wird/werden.

Durch den Spiralschlauch, der nach der Herstellung des Hohlgeflechtschlauchs innerhalb von diesem während der Lagerung, das heißt üblicherweise aufgewickelt auf eine Trommel, verbleibt, stützt den Hohlgeflechtschlauch von dem Inneren aus, so dass der Hohlgeflechtschlauch auch nach der Herstellung und während der Lagerung, bis zu dessen Verwendung, seine äußere, runde Form beibehält. Wenn der Hohlgeflechtschlauch benutzt werden soll, beispielsweise um mehrere Kabel oder Einzellitzen zu bündeln, wird der Hohlgeflechtschlauch mit dem darin befindlichen Spiralschlauch als Stützkörper auf die erforderliche Länge abgelängt. Anschließend werden an dem einzugsseitigen Ende des Hohlgeflechtschlauch die einzelnen Kabel und Litzen an dem Ende des Spiralschlauchs befestigt. Hierzu kann das entsprechende Ende des Spiralschlauchs aus dem Hohlgeflechtschlauch herausgezogen werden, was problemlos möglich ist, da der Spiralschlauch, aufgrund seiner Art, in axialer Richtung dehnbar ist, wobei er gleichzeitig seinen Durchmesser verringert, so dass er innerhalb des Hohlgeflechtschlauchs bewegbar ist. Nachdem die Kabel und Litzen an dem Spiralschlauch befestigt sind, wird an dem anderen Ende des Spiralschlauchs gezogen, wobei sich der Spiralschlauch axial dehnt, seinen Durchmesser verringert, bis dann die Zugkraft auf das einzuziehende andere Ende des Spiralschlauchs übertragen wird. Der Spiralschlauch wird aus dem Hohlgeflechtschlauch herausgezogen, bis das Kabelbündel vollständig von dem Hohlgeflechtschlauch umgeben ist. Somit erfüllt der Spiralschlauch eine doppelte Funktion, nämlich zum einen die Beibehaltung einer runden Form des Hohlgeschlechtschlauchs, während der Lagerhaltung, und zum anderen hat er die Funktion einer Einzugshilfe, was gerade bei großen, benötigten Längen des Hohlgeflechtschlauchs von Vorteil ist. Es ist verständlich, dass der Spiralschlauch auch nur zur Formstabilität des Hohlgeflechtschlauchs während der Lagerhaltung eingesetzt werden kann, das heißt kurze Längen von Kabelbündeln, die durch einen Hohlgeflechtschlauch geschützt werden sollen, können auch ohne den Spiralschlauch als Einzugshilfe in den Hohlgeflechtschlauch eingezogen bzw. durch diesen ummantelt werden.

Bevorzugt wird ein Spiralschlauch verwendet, um den Hohlgeflechtschlauch zu stützen, bei dem benachbarte Wendel oder Windungen einen Abstand zueinander aufweisen. Ein solcher Spiralschlauch ist kostengünstig, zeichnet sich durch ein geringes Gewicht pro Längeneinheit aus und führt insbesondere dazu, dass er biegefreundlich ist, das heißt der Hohlgeflechtschlauch mit einem solchen darin eingesetzten Spiralschlauch kann auch zu Vorratswickel aufgewickelt werden, die einen kleinen Durchmesser haben.

Um das Einziehen von Kabelbündeln in einen Hohlgeflechtschlauch, in dem ein Spiralschlauch eingesetzt ist, zu erleichtern, wird der Spiralschlauch vorzugsweise aus einem federnd nachgiebigen Material gebildet. Derartige Spiralschläuche verringern unter Aufbringung einer Zugkraft in axialer Richtung ihren Durchmesser, so, dass sie leicht aus dem Hohlgeflechtschlauch herausgezogen werden können.

In den Hohlgeflechtschlauch kann ein Spiralschlauch aus Kunststoff eingesetzt werden. Solche Spiralschläuche sind kostengünstig und können aus recycelbaren Materialien gefertigt werden. Als Material für einen Kunststoff-Spiralschlauch eignet sich einerseits Polyamid, das insbesondere dann eingesetzt werden kann, wenn in einer Stufe der Bevorratung oder Weiterverarbeitung eines solchen Hohlgeflechtschlauchs mit Spiralschlauch hohe Temperaturen auftreten. Spiralschläuche aus Polyethylen oder Propylen sind besonders preisgünstig; daher sind solche Spiralschläuche, um den Hohlgeflechtschlauch zu stützen, dann zu bevorzugen, wenn der Spiralschlauch nach der Entfernung aus dem Hohlgeflechtschlauch keiner weiteren Verwendung zugeführt wird (wenn er danach entsorgt wird).

Spiralschläuche aus Kunststoff sollten vorzugsweise aus einem flachen Material gewendelt sein; ein solcher Spiralschlauch eignet sich gut auch als Einzugshilfe.

Der Hohlgeflechtschlauch kann auch durch einen Spiralschlauch aus einem Federdraht gestützt werden. Ein solcher Federdraht kann mit einer Schutzschicht, beispielsweise aus Kunststoff, überzogen werden.

Verfahrensgemäß erfolgt die Einarbeitung des Spiralschlauchs in den Hohlgeflechtschlauch ohne unmittelbaren Kontakt zwischen dem sich bildenden Geflechts des Hohlgeflechtschlauchs und dem Spiralschlauch. Der Spiralschlauch kann während des Flechtvorgangs des Hohlgeflechtschlauchs zugeführt werden und wird lose innerhalb des Hohlgeflechtschlauchs gehalten. Der Hohlgeflechtschlauch mit dem Spiralschlauch im Inneren wird dann auf eine Trommel aufgewickelt. Auf der Trommel können eng benachbarte und übereinander liegende Windungsreihen gebildet werden, da aufgrund des Stützschlauchs im Inneren des Hohlgeflechtschlauchs keine Gefahr besteht, dass der Hohlgeflechtschlauch geflacht wird und dadurch Knickstellen erhält. In jeder Phase der Handhabung des Hohlgeflechtschlauchs mit dem darin befindlichen Spiralschlauch wird dessen runde Form beibehalten.

Wie bereits vorstehend erwähnt, kann der Spiralschlauch, der während der Lagerhaltung als innere Stütze des Hohlgeflechtschlauchs dient, auch als Einzugshilfe verwendet werden. Hierzu muss das einzuziehende Kabel, das Kabelbündel, oder eine andere, durch den Hohlgeflechtschlauch zu schützende Leitung, an dem Ende des Spiralschlauchs befestigt werden. Es hat sich gezeigt, dass es hierzu ausreichend ist, den Spiralschlauch mit einigen Windungen um das Ende des Kabelbündels zu Wickeln, so dass das Ende des Spiralschlauchs eng um das Kabelbündel liegt. Anschließend wird an dem anderen Ende des Spiralschlauchs gezogen, um das Kabelbündel in den Hohlgeflechtschlauch einzuziehen. Falls die Haltekraft des Spiralschlauchs an dem einzuziehenden Ende des Kabelbündels zu gering erscheint, werden entsprechend mehr Windungen des Spiralschlauchs um das Kabelbündel gewickelt, so dass die dadurch erhaltene Haltekraft erhöht und den Anforderungen angepasst werden kann.

Weitere Einzelheiten und Merkmale der Erfindung ergeben sich aus der nachfolgenden Beschreibung von Ausführungsbeispielen. In der Zeichnung zeigt
- Figur 1: eine perspektivische Darstellung eines Hohlgeflechtschlauchs mit Stützkörper gemäß einer ersten Ausführungsform,
- Figur 2: den Hohlgeflechtschlauch der Figur 1 in einer Phase, in der zwei Drähte in den Hohlgeflechtschlauch eingezogen werden,
- Figur 3: eine der Figur 1 entsprechenden Darstellung, einer zweiten Ausführungsform des Hohlgeflechtschlauchs, und
- Figur 4: den Hohlgeflechtschlauch der Figur 3, in einer Darstellung, bei der Kabel in das Innere des Hohlgeflechtschlauchs eingezogen werden.

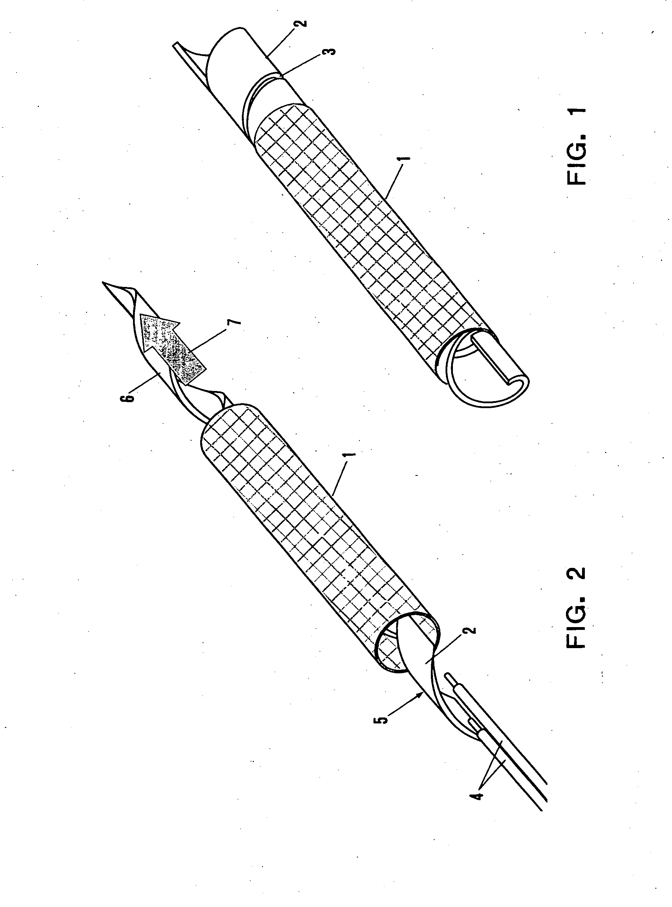

Der Hohlgeflechtschlauch 1, wie er in Figur 1 dargestellt ist, ist aus einzelnen Draht- oder Kunststofflitzen geflochten, wobei in dem Geflecht die Litzen oder Drähte quer zur Längsachse verlaufen. Ein solcher Hohlgeflechtschlauch hat die Eigenschaft, dass er dann, wenn er in axialer Richtunger gestaucht wird, seinen Durchmesser vergrößert, und gleichzeitig seine Gesamtlänge verkürzt, während dann, wenn er axial gestreckt wird, der Durchmesser verkleinert wird. In einen solcher Hohlgeflechtschlauch 1 wird während des Flechtvorgangs ein Spiralschlauch 2 als Stützkörper eingesetzt, so dass der Hohlgeflechtschlauch 1 seine Form, wie sie während des Flechtvorgangs erzeugt wird, beibehält.

Der Spiralschlauch 2 in der Ausführungsform der Figur 1 ist aus einem flachen Kunststoffmaterial gebildet. Die einzelnen Windungen sind geringfügig beabstandet, wie anhand des Zwischenraums 3 in Figur 1 zu erkennen. Aufgrund der Spirale des Stützschlauchs, aber zusätzlich auch aufgrund der einzelnen Zwischenräume 3 zwischen den Windungen des Spiralschlauchs 2, lässt sich der Hohlgelfechtschlauch gut auch zu kleinen Radien krümmen, was für das Aufwickeln des Hohlgeflechtschlauchs auf einer Trommel zur Bevorratung wichtig ist. In jeder Phase der weiteren Handhabung des Hohlgeflechtschlauchs 1 nach seiner Herstellung behält dieser, aufgrund des Spiralschlauchs 2, seine kreisrunde Form bei.

Falls der Hohlgeflechtschlauch 1 eingesetzt werden soll, um Kabel zu bündeln, wird der Stützschlauch 2 entfernt. Ein solcher Vorgang ist in Figur 2 dargestellt. Um Beispielsweise zwei Kabel 4, die in Figur 2 gezeigt sind, in den Hohlgeflechtschlauch 1 einzuziehen, wird das Ende 5 des Spiralschlauchs 2 aus dem Hohlgeflechtschlauch 1 herausgezogen, so dass dieses Ende 5 des Spiralschlauchs 2 frei zugänglich ist. Dann wird der Spiralschlauch 3 mit ein Paar Windungen um die beiden Kabel 4 herumgewickelt, so dass er die beiden Kabel 4 mit diesen Windungen klemmend umgreift. Anschließend wird an dem anderen Ende 6 des Spiralschlauchs 2 gezogen, wie durch den Pfeil 7 angedeutet ist. Durch dieses Ziehen dehnt sich der Spiralschlauch 2 und verringert dabei seinen Durchmesser. Diese Zugkraft wird dann auf das Ende 5, an dem die beiden Kabel 4 klemmend gehalten sind, übertragen, so dass unter weiterem Ziehen an dem Ende 6 des Spiralschlauchs die Kabel 4 in den Hohlgeflechtschlauch 1 eingezogen werden können. Nachdem die Kabel 4 in den Hohlgeflechtschlauch 1 eingezogen sind, kann der Spiralschlauch 2 ohne weitere Hilfswerkzeuge von den Kabeln gelöst werden, so dass sich ein einfacher Handhabungsvorgang ergibt. Der Hohlgeflechtschlauch 1 kann dann in axialer Richtung gedehnt werden, um sich eng an die beiden Kabel 4 anzulegen.

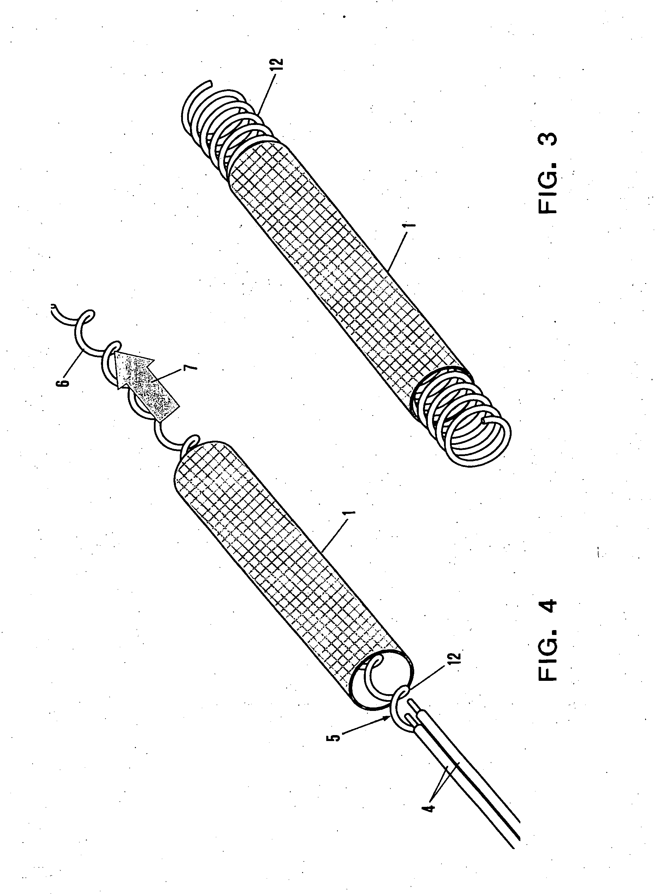

In Figur 3 ist eine zweite Ausführungsform eines Hohlgeflechtschlauchs 1 gezeigt, in dem ein aus einem Draht gewickelter Spiralschlauch 12 aufgenommen ist. Die einzelnen Windungen des aus Draht, vorzugsweise Federdraht, gewickelten Spiralschlauchs 12 sind relativ weit voneinander beabstandet. Während Figur 3 den Zustand des Hohlgeflechtschlauchs 1 für die Lagerhaltung zeigt, ist in Figur 4 wieder die Möglichkeit dargestellt, Kabel 4 in den Hohlgeflechtschlauch 1 einzuziehen. Auch mit diesem aus Federdraht gewickelten Spiralschlauch 12 kann so verfahren werden, dass zum Befestigen der beiden Kabel 4 an dem Spiralschlauch 12 der Spiralschlauch mit einigen Windungen um die beiden Kabel 4 herumgewickelt wird, um die beiden Kabel 4 einzuziehen. Daher zeichnet sich dieser Hohlgeflechtschlauch 1 mit dem darin eingebrachten Spiralschlauch 12 dadurch aus, dass er zum einen seine Form beibehält, zum anderen durch den Spiralschlauch 12 (oder 2) das Einziehen von Kabeln in den Hohlgeflechtschlauch 1 erleichtert wird, was auch für große Längen des Hohlgeflechtschlauchs 1 gilt.

## Patentansprüche

1. Hohlgeflechtschlauch aus rundgeflochtenen Litzen, wobei der Schlauch durch axiales Aufstauchen in seinem Durchmesser vergrößert werden kann und durch Strecken in seinem Durchmesser verkleinert werden kann,
**dadurch gekennzeichnet, dass**
der Schlauch (1) um einen Spiralschlauch (2; 12) herum geflochten ist, wobei der Spiralschlauch (2; 12) einen entfernbaren Stützkörper bildet.

2. Hohlgeflechtschlauch nach Anspruch 1, **dadurch gekennzeichnet, dass** benachbarte Wendel oder Windungen des Spiralschlauchs (2; 12) einen Abstand zueinander aufweisen.

3. Hohlgeflechtschlauch nach Anspruch 1 oder 2, **dadurch gekennzeichnet, dass** der Spiralschlauch (2; 12) aus einem federnd nachgiebigen Material gebildet ist.

4. Hohlgeflechtschlauch nach Anspruch 3, **dadurch gekennzeichnet, dass** der Spiralschlauch (2; 12) unter Streckung seinen Durchmesser verkleinert.

5. Hohlgeflechtschlauch nach einem der Ansprüche 1 bis 4, **dadurch gekennzeichnet, dass** der Spiralschlauch (2) aus Kunststoff gebildet ist.

6. Hohlgeflechtschlauch nach Anspruch 5, **dadurch gekennzeichnet, dass** der Spiralschlauch (2) aus Polyamid gebildet ist.

7. Hohlgeflechtschlauch nach Anspruch 5, **dadurch gekennzeichnet, dass** der Spiralschlauch (2) aus Polyethylen gebildet ist.

8. Hohlgeflechtschlauch nach Anspruch 5, **dadurch gekennzeichnet, dass** der Spiralschlauch (2) aus Polypropylen gebildet ist.

9. Hohlgeflechtschlauch nach einem der Ansprüche 1 bis 4, **dadurch gekennzeichnet, dass** der Spiralschlauch (12) aus einem Federdraht gebildet ist.

10. Verfahren zum Herstellen eines Hohlgeflechtschlauchs, bei dem Litzen zu einem Schlauch rundgeflochten werden, **dadurch gekennzeichnet, dass** während des Flechtens des Schlauchs ein Spiralschlauch, einen entfernbaren Stützkörper bildend, von dem Hohlgeflechtschlauch umflochten wird, der Hohlgeflechtschlauch mit dem Spiralschlauch gelagert wird und bei Gebrauch des Hohlgeflechtschlauchs der Spiralschlauch entfernt wird und mindestens ein Kabel und/oder eine Leitung in den Hohlgeflechtschlauch eingezogen wird/werden.

11. Verfahren nach Anspruch 10, **dadurch gekennzeichnet, dass** das Umflechten des Hohlgeflechtschlauchs ohne unmittelbaren Kontakt mit dem Spiralschlauch erfolgt.

12. Verfahren nach Anspruch 10, **dadurch gekennzeichnet, dass** der Spiralschlauch kontinuierlich während des Flechtvorgangs in den sich bildenden Hohlgeflechtschlauch zugeführt wird.

13. Verfahren nach einem der Ansprüche 10 bis 12, **dadurch gekennzeichnet, dass** mit dem Entfernen des Spiralschlauchs das mindestens eine Kabel in den Hohlgeflechtschlauch eingezogen wird.

14. Verfahren nach Anspruch 13, **dadurch gekennzeichnet, dass** das mindestens eine einzuziehende Kabel mit seinem einen Ende an dem Spiralschlauch befestigt wird.

15. Verfahren nach Anspruch 14, **dadurch gekennzeichnet, dass** zum Befestigen des Spiralschlauchs an dem Ende des Kabels der Spiralschlauch mit einigen Windungen um das Kabel herum gewickelt wird, so dass das Ende des Kabels klemmend gehalten wird.
